# EUROPEAN PATENT SPECIFICATION

(11) **EP 4 511 148 B1**
(45) Date of publication and mention of the grant of the patent: **23.09.2026**
(21) Application number: 23721299.8
(22) Date of filing: 18.04.2023
(51) Int. Cl.: B01D 19/00, F04D 15/00, F24D 19/08

(54) **A METHOD AND SYSTEM FOR DEGASSING LIQUID**
VERFAHREN UND SYSTEM ZUR ENTGASUNG VON FLÜSSIGKEIT
PROCÉDÉ ET SYSTÈME DE DÉGAZAGE DE LIQUIDE

(30) Priority: 20.04.2022 DK PA202270207; 20.04.2022 DK PA202270208
(43) Date of publication of application: 26.02.2025
(73) Proprietor: Grundfos Holding A/S, 8850 Bjerringbro (DK)
(72) Inventor: SØRENSEN, Søren Emil, 8850 Bjerringbro (DK); ERIKSEN, Gert Friis, 8850 Bjerringbro (DK); SVENDSEN, Lasse Louis, 8850 Bjerringbro (DK)
(74) Representative: Plougmann Vingtoft a/s
(86) International application number: PCT/EP2023/060029
(87) International publication number: WO 2023/203029

(56) References cited:
- EP-A1- 0 580 881
- EP-A1- 0 652 406
- EP-A2- 0 902 239
- EP-A2- 1 855 060
- AT-B- 409 661
- CH-A2- 710 814
- US-A1- 2011 168 017

## Description

### FIELD OF THE INVENTION

The present invention relates to method and system for degassing liquid. The degassing system preferably comprises a centrifugal pump, a tank, a throttling device arranged at an upper end of the tank to receive liquid to be degassed through said throttling device and an outlet arranged at a lower end of said tank fluidicly connected to a suction side of the centrifugal pump a liquid outlet connection fluidicly connected to the discharge side of the centrifugal pump to discharge liquid being at least partially degassed and a gas outlet fluidicly connected to the tank to discharge gas accumulated in the tank during degassing of liquid. In a preferred embodiment, the method comprises selecting a treatment pressure to be obtained in the tank upstream of the centrifugal pump and setting the rotational speed of the centrifugal pump to provide said selected treatment pressure to be obtained.

### BACKGROUND OF THE INVENTION

During use of liquid based system such as HVAC system or in general systems including liquid circulation, air or other gaseous substances may be present in the liquid. Such gaseous substances may originate from liquid being added to the system from a liquid source where no degassing has been carried out, which typically is the situation where tap-liquid is used. Gaseous substances may also originate from entrainment of gasses into the liquid based system.

In particular liquid based heating or cooling systems air in the liquid results in a decrease of the heating of cooling capacity as the specific heat capacity of air is significantly lower than that of liquid whereby present of air in the liquid results in that the specific heat capacity of the liquid with air is reduced compared to liquid not containing air. This reduction of specific heat capacity results in a less efficient heating or cooling, inter alia as more liquid is to be transported to meet a given heating or cooling capacity.

Another issue pertaining to air in liquid is that it may give rise to corrosion, as the air contains oxygen, internally on the surface metal parts which may result in leaks and/or increased flow resistance.

Yet another issue pertaining to air in liquid is that cavitation in pumps or other in regions where the pressure is lowered, as air in liquid reduces the pressure at which cavitation occurs.

Systems for degassing of liquid are known and comprise typically a number of discrete components, such as valve, tank, pump which are assembled by fittings to form a degassing system which is fluidic connected to a liquid based system containing liquid to be degassed. Further, the pump used to lower the pressure in a tank for degassing purposes operates at constant rotational speed.

The pressure in the liquid based system to be degassed although desirably should be constant, the pressure often varies e.g. due to temperature changes in the liquid. In other situations the same degassing system is used in different liquid based systems having different pressure characteristics. By this, cavitation in and/or less optimal operation of the pump is often the result.

To avoid cavitation, a controllable throttling device is typically arranged at the discharge side of the pump to add flow resistance to the degassing system to avoid cavitation, and such a throttling device represent an additional power consumption by the degassing system.

US 8,562,719 B2 shows an example of a degassing system comprising manually adjustable exit valve arranged at the discharge side of the pump.

CH710814A2 discloses A device for degassing a liquid from a liquid-conveying heating or coolant circuit, or from a make-up line to the heating or coolant circuit, comprises a degassing unit for removing gas from a liquid by means of the alternating generation of negative pressure and overpressure. The degassing unit comprises a degassing vessel, a supply line for supplying the liquid to the degassing vessel, a discharge line for discharging the liquid from the degassing vessel, which discharge line comprises a pump and can be connected with the heating or coolant circuit, and a degassing valve unit. The device also comprises a hydrocyclone for generating a vortex flow of the liquid to be degassed, said hydrocyclone being connected on one side to the degassing unit and on the other side with a feed line for supplying the liquid.

Hence, an improved method and system for degassing would be advantageous, and in particular a more efficient method and system for degassing would be advantageous.

### OBJECT OF THE INVENTION

It is an object of the invention provide a method and system for degassing which is less prone to cavitation.

It is a further object of the invention provide a more energy efficient degassing of liquid.

It is a further object of the present invention to provide an alternative to the prior art.

In particular, it may be seen as an object of the present invention to provide a method and system that solves the above mentioned problems of the prior art.

### SUMMARY OF THE INVENTION

Thus, the above described object and several other objects are intended to be obtained in a first aspect of the invention by providing a method of degassing liquid using a liquid degassing system comprising according to claim 1.

By arranging the throttling device at an upper end of the tank, an efficient degassing can be provided. In preferred embodiments, liquid to be degassed enters the interior of tank through the throttling device and may leave the throttling device as droplets, such as a mist. Such formation of droplets has an improved degassing effect due to the total high surface area of the droplets, such as mist.

In the first aspect the method comprises
- arranging the liquid degassing system in fluidic connection with a system being degassed carrying liquid to be degassed so that said liquid flows into the tank;
- selecting a treatment pressure to be obtained in the tank upstream of the centrifugal pump;
- setting the rotational speed of the centrifugal pump to provide said selected treatment pressure (Pt) to be obtained.

By this, the treatment pressure and the rotational speed of the centrifugal pump may be set in an energy optimized manner and/or in a manner where the cavitation is at least mitigated. A reference to rotational speed of the centrifugal pump is as commonly preferably used to reference a rotation of a characteristic part of the pump, such as impeller(s) of the centrifugal pump.

It is to be emphasised that although preferred embodiments of the invention is disclosed with reference to degassing liquids, the invention is particular useful in connection with degassing water.

The individual aspects of the present invention may each be combined with any of the other aspects. These and other aspects of the invention will be apparent from the following description with reference to the described embodiments.

*System being degassed* is preferably used herein to denote a system containing liquid to be degassed and to which a degassing system is fluidicly connected to receive liquid to be degassed and to deliver at least partly degassed liquid. A system being degassed is in preferred embodiments a HVAC system (heating, ventilation and/or air conditioning system).

*Treatment pressure to be obtained* is typically used herein to denote the pressure at which the degassing is to be carried out.

*Actual treatment pressure* is typically used herein to denote the actual pressure at which a degassing is carried out. The actual treatment pressure can deviate from the treatment pressure to be obtained.

*Water* as used herein refers to a liquid containing water or a liquid essentially being water. A liquid containing water may in a non-limiting example be a water with an antifreeze agent, such as glycol.

*Gas* as used herein in connection with degassing water typically refers to air.

The invention can be implemented assisted by means of hardware, software, firmware or any combination of these. The invention or some of the features thereof can also be implemented as software running on one or more data processors and/or digital signal processors. Thus, a method according to the invention may be a computer implemented method.

### BRIEF DESCRIPTION OF THE FIGURES

The present invention and in particular preferred embodiments according to the invention will now be described in more details with regard to the accompanying figures. The figures show ways of implementing the present invention and are not to be construed as being limiting to other possible embodiments falling within the scope of the attached claim set.
Figure 1 is a schematic illustration of a degassing system according to a preferred embodiment; the figure illustrates components of the degassing system in conceptual manner;
Figure 2 is a schematic illustration of pressure variation in a liquid degassing system according to a preferred embodiment of the invention;
Figure 3 is a schematic illustration of a method of determining a rotational speed of a pump in a liquid degassing system according to a preferred embodiment of the invention;
Figure 4 is a schematic illustration of a method of determining a rotational speed of a pump in a liquid degassing system according to another preferred embodiment of the invention;
Figure 5 is a schematically graphic representation of treatment steps according to preferred embodiments;
Figure 6 is a schematically graphic representation of treatment steps introducing treatment period, maximum treatment time, treatment time and minimum treatment time according to preferred embodiments;
Figure 7 is a longitudinal sectional representation through a liquid degassing system according to a preferred embodiment of the invention.

### DETAILED DESCRIPTION OF PREFERRED EMBODIMENTS

In the following, detailed descriptions of various embodiments of a method used to degas liquid are disclosed. Such methods make use of a liquid degassing system which comprises a number of components as will be disclosed in the following. The method is designed to degas liquid contained in what herein is referred to a system being degassed.

Examples on systems being degassed are HVAC systems (heating, ventilation and/or air conditioning system) and in which the liquid is at a static pressure (evaluated during no flow condition), typically being elevated relatively to atmospheric pressure. In order to degas liquid, liquid is inlet to a tank in which the static pressure is reduced by use of a pump. The reduced pressure in combination with the flow liquid into the tank being smaller than the flow of liquid out of the tank, creates a free liquid surface in the tank with a gas phase above. A governing principle for the degassing is described by Henry's law which states that the amount of dissolved gas in a liquid is proportional to its partial pressure above the liquid.

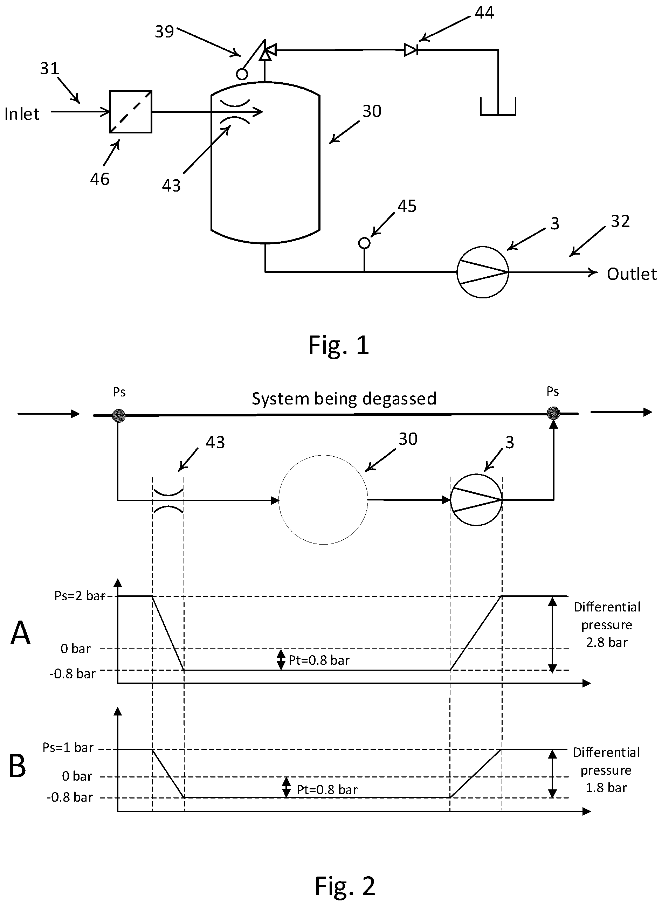

Reference is made to fig. 1 schematically illustrating a degassing system according to a preferred embodiment used in connection with the method according to the present invention for degassing liquid. Fig. 1 illustrates components of the degassing system in conceptual manner. As illustrated the system comprising a centrifugal pump 3 which has a suction side and a discharge side and the pump 3 is of a type having a variable and controllable rotational speed. A tank 30 is comprised in the system. The tank 30 has vertical extension and has a liquid inlet connection 31 comprising a throttling device 43 arranged inside and at an upper end of said tank 30 to receive liquid to be degassed through said throttling device 43. An outlet is arranged at a lower end of tank 30 fluidicly connected to suction side of the centrifugal pump 3. Thus, by the presence of the throttling device 43 and the pump being 3 capable of providing suction, the pressure in the tank 30 can be lowered to a value being lower than the pressure in the fluid upstream of the throttling device 43. Further, due to the presence of the throttling device the pump will suck more liquid out from the tank 30 than what enters into the tank 30, whereby a gradually increasing gas volume will be provided inside the tank 30 above the liquid surface.

A liquid outlet connection 32 is provided fluidicly connected to the discharge side of the centrifugal pump to discharge liquid being at least partially degassed; and a gas outlet 39 is fluidicly connected to the tank 30 to discharge gas accumulated in the tank 30 during degassing of liquid. In a preferred embodiment the gas outlet 39 comprising an air vent such as an automated air vent. Further, a check valve 44 may be arranged to prevent a flow of gas into the tank through the gas outlet 39. An optional filter or strainer 31 may be provided to filter or strain liquid before inlet into the tank 30.

In many of the preferred embodiments, it is useful to determine the pressure in the degassing system and to accomplish that, a pressure sensor 45 may be arranged in the degassing system. The position of the pressure sensor 45 in the illustrated embodiment in fig. 1 is at the suction side of the pump 3, but other positions for determining the pressure are possible such as in the interior of the tank 30.

When the degassing system is used to degas, the degassing system is arranged in fluidic connection with a system being degassed carrying liquid to be degassed so that said liquid flows into the tank 30. This is schematically illustrated in fig. 2 wherein the throttling device 43, the tank 30 and the centrifugal pump 3 are illustrated in combination with a pipeline of the system being degassed. Although the pipeline is illustrated as open for flow whereby some liquid bypass the degassing system, one or more valves (not shown) may be arranged to direct liquid into degassing system and at least partially block the bypass flow of liquid. Ps in fig. 2 is used to indicate the pressure in the system being degassed.

The method according to preferred embodiments may involve a selection of a treatment pressure Pt to be obtained in the tank 30 upstream of the centrifugal pump 3. This treatment pressure may be referred to as a negative pressure as it is often lower than the atmospheric pressure.

Once a treatment pressure Pt to be obtained is selected, the rotational speed of the centrifugal pump 3 is set to provide the selected treatment pressure Pt.

In many preferred embodiment, the pressure is determined by use of a pressure sensor, as disclosed below, arranged to determine the actual treatment pressure. The pressure may preferably be determined as a difference pressure between the atmospheric pressure outside the degassing system and the pressure e.g. in the tank 3 or at the suction side of the centrifugal pump.

It is noted that for instance pump characteristics of the pump (corresponding values of differential pressure and volume flow for a number of different rotational speeds) may be used to select a rotational speed of the centrifugal pump. However, this may require at least an indication of the pressure of the fluid upstream of the throttling. In such embodiments, the method may comprise the steps of determining a pressure Ps in the system being degassed and obtaining flow resistance characteristics of the throttling device 43.

The pressure in the system being degassed Ps may be determined by a pressure sensor or estimated based on operation parameters of the system being degassed, e.g. based on that a system being degassed typically is set to operate at a particular pressure. The flow resistance characteristics of the throttling device comprising corresponding value of pressure loss over and flow through the throttling device 43.

With the treatment pressure to be obtained Pt known, the rotational speed of the pump may be determined based on the pump characteristics of the centrifugal pump 3. The rotational speed is determined so that the centrifugal pump 3 provides a differential pressure across the centrifugal pump 3 matching the sum of said pressure Ps in the system being degassed and said treatment pressure Pt to be obtained (Ps+Pt) with one of the flow resistance characteristics.

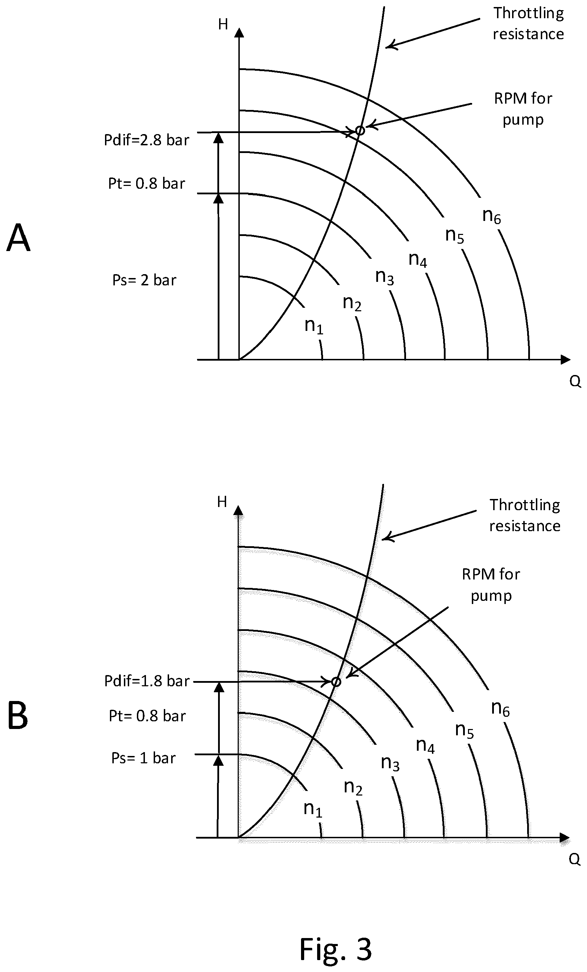

This has been detailed in fig. 3. Fig. 3 A and B shows two different operational points for the centrifugal pump 3 plotted in graphs illustrating pump characteristic (pressure - head H and volume flow Q) for a number of different rotational speeds of the centrifugal pump nᵢ. In the graphs, the flow resistance through the throttling device 43 is also plotted (pressure loss as function of volume flow).

In fig. 2A, the pressure in the system being degassed is (non-limiting example) Ps=2.0 bar and the treatment pressure Pt to be obtained is selected to Pt=0.8 bar (non-limiting example). Thus, the differential pressure to be provided by the centrifugal pump is Ps+Pt=2.8 bar. Kindly observe that a pressure in the system being degassed is given relatively to atmospheric pressure, whereby a pressure of Ps+Pt of 2.8 bar is equal to an absolute pressure of 0.2 bar. In this it is assumed that the flow resistance between the discharge side and the system being degassed, by which the liquid outlet connection 32 connects the degassing system to the system being degassed, is negligible. This is typically accomplished by not arranging a valve or similar throttling device at the discharge side of the centrifugal pump 3.

As illustrated in fig. 2A, once Pt+Ps is known the rotational speed of the centrifugal pump 3 is selected as the point of the pump characteristic where the flow resistance characteristics of the throttling device 43 is equal to Pt+Ps.

During operation of the degassing system, the pressure in the system being degassed may change e.g. drop to a pressure of Ps=1.0 bar. By this, the sum of the pressures Pt+Ps is 1.8 bar. If the rotational speed of the pump 3 is not changed, the centrifugal pump will attempt to generate a differential pressure of 2.8 bar which obviously cannot be achieved. The result of this is typically that cavitation will occur in the impeller(s) of the centrifugal pump and that the pump is operating at a sub-optimal energy condition, e.g. using more power, than what is needed to perform the degassing. To avoid this, a new rotational speed of the centrifugal pump 3 is selected as shown in fig. 3B

The rotational speed of the centrifugal pump may in another embodiment of the invention be determined by what may be referred to as an iterative process. In such embodiments setting the rotational speed of the centrifugal pump 3 to provide the selected treatment pressure Pt to be obtained may comprise determining an actual treatment pressure, where the actual treatment pressure being the pressure in the tank 30 or the pressure upstream of the centrifugal pump, such as at the suction side of the pump 3 or in the tank 30. It is noted that the pressure loss between the tank 30 and the suction side of the centrifugal pump 3 often are negligible whereby the two pressures are substitutable in relation with the present invention. However, it is often more practical to determine the pressure at the suction side of the centrifugal pump 2.

The iterative approach comprises the step of comparing the actual upstream pressure with the selected treatment pressure Pt to be obtained and if a difference is present, the rotational speed of the pump is adjusted to set the actual upstream pressure substantially equal to the selected treatment pressure Pt to be obtained.

The adjustment of the rotational speed of the centrifugal pump 3 is increased if actual treatment pressure is smaller than the selected treatment pressure to be obtained and decreased if the actual treatment pressure is larger than said selected treatment pressure to be obtained.

The adjustment of the rotational speed is typically carried out incrementally, e.g. the change in rotational speed may be a predetermined amount such as an increment of 10 RPM, and the actual treatment pressure is compared with selected treatment pressure Pt to be obtained after each increment of the rotational speed. This is typically carried out until said actual treatment pressure is substantial equal to said selected treatment pressure Pt to be obtained. In situations where the pressure in the system being degassed is varying e.g. from time to time, the adjustment of the rotational speed may be carried out while the degassing is carried out, although no adjustment may occur in periods where the pressure is not varying.

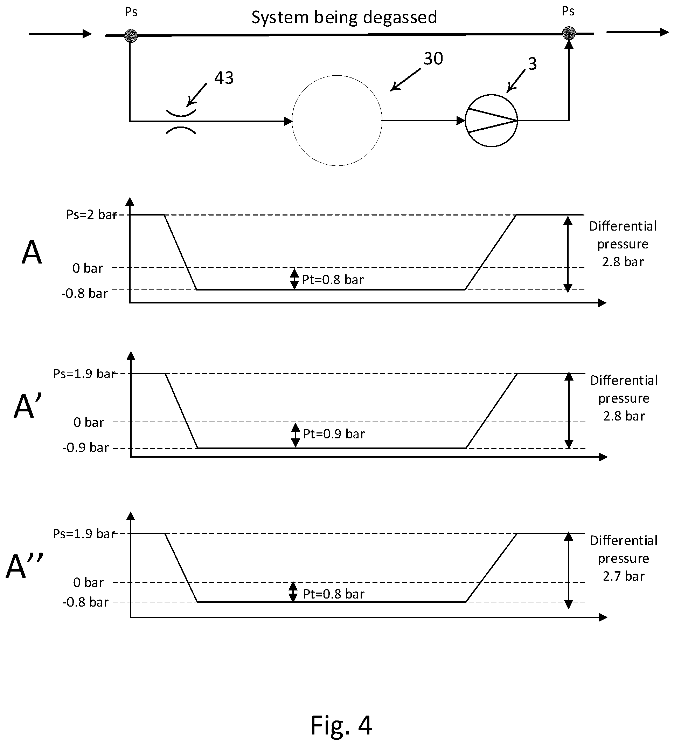

Such an embodiment is schematically illustrated in fig. 4. In fig. 4A, the degassing system is operating at differential pressure of 2.8 bar according to a pressure in the system being degassed Ps=2 bar and an actual treatment pressure of -0.8 bar. Kindly note that in fig. 4 the treatment pressure is given relatively to the atmospheric pressure defined as 0 bar.

In fig. A', the pressure in the system being degassed has dropped to Ps=1.9 bar, whereby the actual treatment pressure is 0.9 bar, which is larger than the treatment pressure to be obtained of 0.8 bar. Accordingly, the differential pressure to be obtained is to be lowered to 2.7 bar, and the rotational speed of the centrifugal pump 3 is set in accordance with the 2.7 bar. This is illustrated in fig. 4A". In case the pressure in the system Ps is increased, the process of adjusting the rotational speed of the centrifugal pump 3 is the same.

It is noted, that the examples on pressure levels are non-limiting to the scope of the invention.

The centrifugal pump 3 may be driven by a number of different drives such as hydraulic or an internal combustion engine. In many preferred embodiments, the degassing system comprising an electrical motor 5 with an electrical/electronic control, where the electrical motor 5 being connected to the centrifugal pump 3 to drive the centrifugal pump 3. The electrical/electronic control controls the electrical motor's rotational speed and thereby the rotational speed of the centrifugal pump 3. The electrical motor 5 may advantageously be liquid cooled, e.g. cooled by the liquid flowing through the degassing system. However, such implementation may be limited to degassing liquid having a lower temperature, such as lower than 70 degrees Celsius.

In preferred embodiments, the pump 3 is driven by an electrical motor and the rotational speed of the electrical motor and thereby rotational speed of the pump 3 is set by use of a frequency converter which provides power to an electrical motor driving the pump 3. In embodiments comprising a frequency converter, a mapping between control input to the frequency converter and rotational speed of the pump 3 has preferably been provided, whereby the rotational speed corresponding can be set in accordance with such mapping.

While, for instance, the pump characteristics as exemplified in fig. 2 may provide a mapping between rotational speed for the pump to meet the selected treatment pressure Pt based on the throttling resistance, such pump characteristics may not be available or may be less accurate than what is desired.

In such cases - or used as a general control method - preferred embodiments comprise control of the rotational speed by a PID controller (positive-integral-derivative controller) or a PLC (programmable logic controller). In such embodiments, the actual degassing pressure in the degassing system is provided, e.g. as disclosed above with regards to the pressure sensor 45.

For the PID controller, the desired setpoint is the selected treatment pressure, the process variable is the actual treatment pressure (measured by the pressure sensor 45) and the control parameter is rotational speed of the pump 3. By this, the PID controller will seek to minimize the difference between the actual treatment pressure and selected treatment pressure by altering the rotational speed of the pump.

For the PLC controller, the PLC controller may be programmed to provide a rotational speed signal to the pump 3 or to a frequency converter (when a frequency converter is used) based on an input signal representing the selected treatment pressure Pt.

As the rotational speed of the pump is controlled so at to set the rotational speed of the centrifugal pump 3 to provide the selected treatment pressure, an essentially precise control of the pressure is provided which in turn optimises degassing and reduces energy consumption. These benefits becomes larger when the pressure in the system being degassed varies over time as the rotational speed may be varied so as to provide a substantial constant treatment pressure e.g. 0.2 bar (absolute pressure), whereby the risk of the pump operating a less effective RPM, such as a too high RPM, is greatly reduced.

Thus, components of a degassing system according to the present invention typically include a centrifugal pump 3 having a suction side and a discharge side and an electrical motor with an electrical/electronic control, where the electrical motor being connected to the centrifugal pump 3 to drive the centrifugal pump 3.

A tank 30 which has vertical extension is also comprised in the liquid degassing system. The tank 30 has an liquid inlet connection 31 with a throttling device 43 arranged at an upper end of said tank 30 to receive liquid to be degassed through the throttling device 43. "arranged at an upper end" refers to that the liquid enters the tank 30 at an upper end. The tank 30 further has an outlet arranged at a lower end of said tank 30 and the outlet is fluidicly connected to suction side of the centrifugal pump 3.

The throttling device 43 provides a throttling whereby the pressure in the tank 30 can be reduced relatively to the pressure of the pressure of the liquid in the system being degassed by use of the centrifugal pump 3. The throttling device 43 may be designed as or including a nozzle 20 so that the liquid leaving the nozzle, leaves the nozzle as droplets, such as mist. Such formation of droplets has an improved degassing effect due to the total high surface area of the droplets.

A liquid outlet connection 32 is provided fluidicly connected to the discharge side of the centrifugal pump to discharge liquid being at least partially degassed. A gas outlet 39 is provided fluidicly connected to the tank 30 to discharge gas accumulated in the tank 30 during degassing of liquid. This liquid outlet connection 32 is typically connected to the system being degassed in a manner so that flow restrictions are not present whereby the pressure at the discharge side match, such as being essentially equal, to the pressure in the system being degassed.

In the embodiment shown in fig. 1, optionally auxiliary elements are also shown. In the shown embodiment, the gas outlet 39 comprising an automatic air venting device and a check valve (one way valve) is arranged downstream of the automatic air venting device. A fluidic connection is made from the outlet of the check valve to a drain. A filter 46 is arranged to filter the liquid prior to entering into the throttling device 43. Such a filter is of the known type used within plumping to filter smaller particles off the liquid. The sensor 45 may be a pressure sensor or a combined pressure and temperature sensor, or even separate pressure and temperature sensors.

Liquid to be degassed flows into the tank 30 having a reduced pressure provided by the centrifugal pump 3 in combination with the throttling device 43 whereby gas escape from the free surface of the liquid inside the tank 30. During this degassing the amount of liquid in the tank 30 gradually decreases (as the volume flow into the tank 30 is smaller than the volume flow out of the outlet connection 32) whereby the gas occupies gradually more and more volume of the tank. When gas is to be outlet from the tank 30, the centrifugal pump is stopped and gas is outlet through a gas outlet 39 being a connection between the interior of the tank 30 and the exterior. When the pump is stopped, liquid will continue to flow into the tank 30 whereby gas accumulated in the tank is forced out by the incoming liquid. Depending on the mode of implementation of the gas outlet 39, the gas outlet 39 may comprise a check valve or other suitable valve devices.

As indicated in the above, a degassing method is carried out in one or more treatment steps. Such a treatment step is defined to have a duration between begin and end of a treatment step, where begin is when the pump is started and end is when the pump is stopped. A treatment step is furthermore considered to begin with liquid present in the tank 30 typically with liquid occupying the full volume of the tank, but the invention is not limited to a full tank.

After a treatment step has been carried out, a flushing step is carried out during which gas accumulated in tank 30 during the treatment step is flushed out. It is to be noted that flushed out is to be interpreted in broad terms covering the process of removing or allowing the gas accumulated in the tank 30 to flow out from the tank 30. Flushing refers in preferred embodiment to the process of incoming liquid displacing the gas out through the gas outlet 39.

To allow e.g. for automation of the degassing, a liquid degassing system according to preferred embodiments is configured to determine during a treatment step an actual value of a degassing parameter expressing an operation state of the system. Such a degassing parameter is preferably one of the following parameters:
- an electrical power consumed by the electric motor 5 during driving of the centrifugal pump 3. As the electrical power consumed by the electric motor is indicative of the pump work, this parameter may be used to detect whether the pump is pumping liquid, gas or a mixture of both. As a rule of thumb, pumping liquid requires more electrical power than pumping gas due to the difference in density, whereby if the electrical power decreases during a treatment step, this is indicative of that gas has reached the pump.
- a rotational speed of the electrical motor. As for the power consumed, the rotational speed is also indicative of the pump work. As rule of thumb, if the rotational speed increases during a treatment step, this indicate that gas has reached the pump.
- an actual treatment pressure. During a treatment step, the pump is typically operated at rotational speed providing the desired pressure, e.g. at a constant rotational speed and the pressure in the tank is essentially constant; however if the pressure in the tank decreases this indicates that gas has reached the pump.

As outlined, a common denominator for these parameters is the indication that gas has reached the pump, and such an operation state is referred to as "dry running". It is noted, that the centrifugal pump used in connection with the present invention preferably is protected so as to be able to operate in dry running, at least for shorter periods of time, which may be accomplished by suitable selected seals and bearings. However, when gas reaches the pump 3, there is no need to continue the degassing, as gas occupies the full volume of the tank 30 with essentially no liquid to degas present in the tank 30 and the pump 3 is consequently stopped.

The stopping function has been implemented by providing a dry-running threshold for at least one of the degassing parameters, and the dry-running threshold represents a state in which the centrifugal pump is in an at least partly dry-running condition, that is the fluid reaching the pump contains gas and liquid or is essentially gas. The system is configured to during a treatment step to determine an actual value of the degassing parameter, and compare the actual value of the degassing parameter with the relevant dry-running threshold and ending the treatment step if the actual value of the degassing parameter is outside the dry-running threshold. The ending of a treatment step includes stopping the pump.

The thresholds and ending may be implemented as
i) Rotational speed threshold: If the rotational speed is larger than a rotational speed threshold, then end the treatment step.
ii) Power threshold: If the electrical power consumed by the pump is smaller than a power threshold, then end the treatment step.
iii) Pressure threshold: If the actual treatment pressure in the tank 30 is smaller than a pressure threshold, then end the treatment step.

By this, the need for introducing a level sensor in the tank to detect when no liquid is present in the tank has been mitigated or even avoided.

It is noted, that the degassing parameter may fluctuate over time and an adequate averaging may be used to smooth out fluctuations in the degassing parameter. In some embodiments, determining the actual value of the degassing parameter may comprise a moving average calculation. While a averaging may be used to smooth out fluctuations, it should preferably be designed so that surging caused by gas entering the pump is not smoothed out as when surging onset, the pump is preferably to be stopped. Surging typically occurs at a different frequency that other fluctuation and the difference in frequency can be used to design an adequate averaging.

As outlined above, the treatment step is ended once a degassing parameter is outside a dry-running threshold, where the dry-running threshold indicates that gas has reached the pump 3, which corresponds to that essentially no more liquid is present in the tank 30. On the other hand, when liquid occupies the whole volume of the tank 30, the degassing parameter(s) is(are) at a limit. This is in some preferred embodiments used to define the dry-running threshold relatively to an initial stage wherein the tank 30 is substantially filled with liquid. As an example, with the tank filled with liquid the rotational speed of the pump 3 is 4500 RPM, and the dry-running threshold may be implemented e.g. as 10% of 4500 RPM or even larger than n RPM. However, the threshold(s) may also be defined otherwise e.g. based on an expected value when gas has not reached the pump 3.

When the treatment step has ended, one of the above disclosed flushing steps is carried out. To increase the speed of treatment process, the flushing step is typically carried out substantially after the treatment step has ended, however, a flushing step may be carried out at a later point in time. If a flushing step is to be postponed, suitable valves arranged to prevent liquid from entering the tank 30 is typically arranged in the degassing system. It is noted, that a flushing step - as detailed in the following - may be carried out by stopping the pump, whereby incoming flow of liquid displaces the gas accumulated in the tank 30.

During the flushing step, the centrifugal pump (3) is stopped and the flushing step comprises inletting liquid into the tank to fill the tank 30 with liquid whereby the inlet liquid displaces gas out of the tank through the gas outlet 39. As the pressure in the tank 30 at the end of the treatment step is lower than the pressure in the incoming liquid and the flow resistance in the centrifugal pump represents a substantial resistance compared to the resistance into the tank through the liquid inlet connection 31, liquid flows into the tank, although it may be anticipated that a small back-flow through the pump 3 and into the tank 3 may occur.

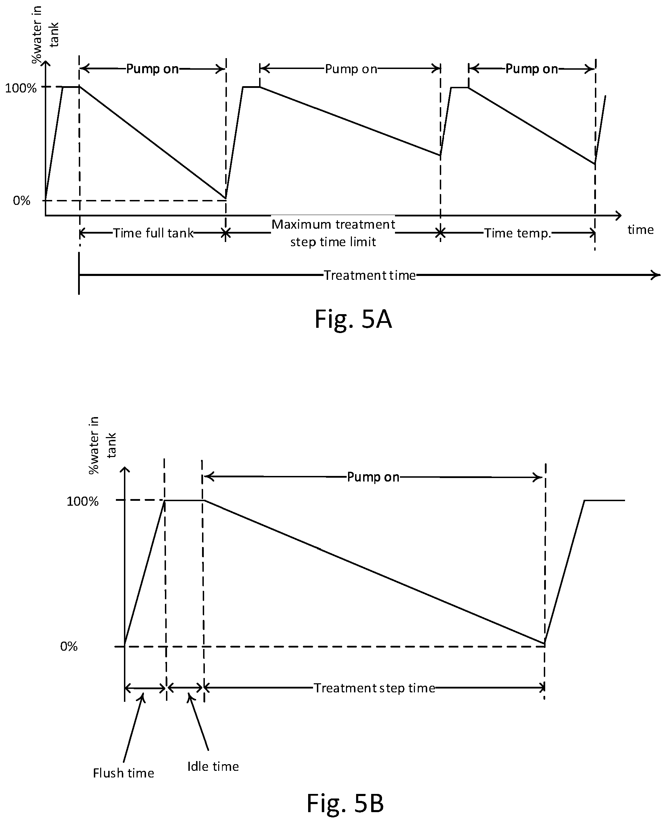

The above disclosure is exemplified in fig. 5A (first section of graph) and 5B. Fig. 5A is an enlarged graph of the first section of the graph of fig. 5A. As shown in fig. 5B, treatment of liquid comprising a flushing step which has the duration "Flush time" during which the liquid content in the tank 30 increases from 0% to 100%.

While the above disclosed method of comparing a dry-running parameter with a threshold dictates an end of a treatment step, there are sometimes so small amounts of gas present in the liquid that a dry-running condition is never reached although gas accumulates in the tank or it may take disproportionate long time. In such scenarios, it has been found advantageous e.g. for power consumptions reasons to end a treatment step based on another criteria than dry-running. One such criteria is shown in fig. 5A, middle part, where it is shown that a treatment steps is limited to last a maximum treatment step time limit. When the treatment step time exceed the maximum treatment step time limit the treatment step is ended by stopping the pump 3. As also shown in fig. 5A, the rate of change in %liquid in the tank as function of time is smaller when the maximum treatments step time limit (middle section of graph) criteria is used compared to the rate of change where the dry-running criteria (first section of graph) is used.

Fig. 5A also shows another criteria which may be implemented to end a treatment step. The shown criteria relates to the temperature of the liquid, typically measured in position between the tank 30 and the pump 3. Sometimes the temperature of the liquid is higher than what can be handled by the equipment, such as the pump, or the degassing system in general and if the temperature reaches a pre-set temperature limit, the treatment step is ended. The boiling temperature of the liquid is also depending on the pressure, and since the pressure of the liquid is reduced, the combination of pressure and temperature may result in that the liquid begins to boils and/or that cavitation may occur in the pump. Such boiling and/or cavitation is/are to be avoided and therefore the treatment step is ended if the temperature in combination with the pressure reaches a boiling and/or cavitation condition.

It may also be advantageous to postpone a treatment step after a flushing step. To this, an idle time is introduced where the pump is not running and the pressure in the tank 30 is in balance with the system being degassed. The flow through the degassing system is typically zero or substantially zero. Such an idle time is advantageous in order to save energy as it has been found that a more effective degassing may be obtained by introducing an idle time as the system being degassed typically needs some time to adjust gas-wise to previous degassing(s).

It has also been observed that it may provide a more cost effective degassing with regards to energy consumption, if the degassing is not continued for a longer time period that a treatment time T_{T}. The treatment time is indicated fig. 5A as a point in time later than the time length of the graph show. The treatment time is typically linked to the system being degassed, and the treatment steps are carried out within duration not exceeding a treatment time T_{T}. It is to be noted that a treatment time typically is repeated after a certain duration of time, for instance during a 24 hours period, the degassing is carried out during the first 4 hours (treatment time equal 4 hours), which is repeated when the 24 hours period has ended. Accordingly, two treatment time periods are time wise separated by a downtime during which the same conditions as for the idle time prevails. In some preferred embodiments, the treatment time and downtime are pre-set by a user.

As the system being degassed typically is dynamic and in some cases involves that fresh liquid is added to the system, there may be a need to dynamically adjust the treatment time in order to optimise the degassing, typically with a boundary condition to minimize energy consumption. On way of implementing such a dynamical adjustment of the treatment time may involve that at least two treatment steps are carried out within a treatment time (e.g. one originating from a previous adjustment or one pre-set by a user) and recording whether a number of the treatment steps within said treatment time have been ended by said maximum treatment step time has been reached. As repeatedly ending of treatment steps by meeting the maximum treatment step time is indicative of lower amounts of gasses in the liquid of the system being degassed, it may typically be beneficial to decrease the treatment time as prolonged degassing may in a worst case scenario not degas any gasses from the liquid but still consume energy.

A different situation may also occur, namely where a number of treatment steps are ended on the basis of the dry-running parameter, which is indicative of higher amounts of gas in the liquid and that the treatment time beneficially could be increased. In such case, the method involves that at least two treatment steps are carried out within said treatment time and recording of whether a number of the treatment steps within said treatment time have been ended by the actual value of degassing parameter has been outside said dry-running threshold and in confirmative case increase the treatment time.

The increase or decrease of the treatment time may be determined adding or subtracting a predefined time increment *Δt* to the treatment time. The change to the treatment time *Δt* may be made proportional to the number of times within the treatment time, the treatment has been ended by the respective criteria.

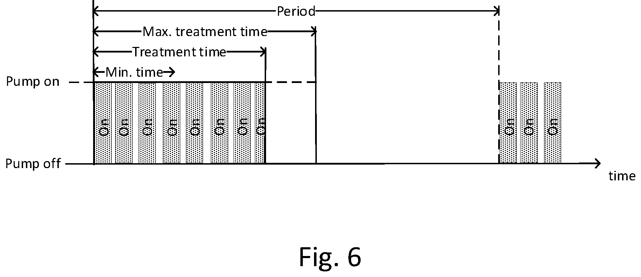

Fig. 6 provides a graphical representation of the treatment time as well as introduces a maximum treatment time, a minimum treatment time and a period. The boxes in the graph labelled with "On" represent treatment steps. As shown in the figure, the treatment time is bound so that it cannot be longer than a maximum treatment time or shorter than a minimum treatment time. When increase or decrease of the treatment time in implemented, the increase or decrease is typically limited in the sense that the maximum and minimum are not exceeded. The period also introduced in fig. 6 represents a period which is repeated, that is the one period is succeed by a next period.

As presented herein, the pressure in the tank 30 is to be reduced relatively to the pressure of the liquid coming from the system being degassed. Accordingly, prior to beginning a treatment step and with liquid present in the tank 30, a value of treatment pressure to be obtained.

The negative pressure is the amount by which the pressure of the liquid in tank 30 is to be reduced with. For instance, if the pressure of the liquid in the fluid upstream of the throttling device is 2.5 bar, a negative pressure could be -0.8 bar, that is the resulting pressure in the tank 30 during a treatment step is 1.7 bar. The magnitude of the negative pressure is typically set by a user.

With the negative pressure known, the rotational speed for the centrifugal pump 3 required to produce said negative pressure can be determined. This determination can e.g. be determined on the basis of pump characteristics, such as corresponding values of Q (volume flow), Head (pumping pressure) and rotational speed of the pump.

By this, a treatment step can be initiation and performed, which involves rotating the centrifugal pump 3 with the determined rotational speed. The rotational speed may be reached by a ramp-up of the rotational speed. Similarly, when the rotation of the pump is to be stopped this is typically carried out by a ramp-down of the rotational speed.

As it cannot be absolutely guaranteed that the determined rotational speed of the centrifugal pump provides the negative pressure - or treatment pressure - to be obtained, the negative pressure produced in the tank 30 during a treatment step may determined and if the negative pressure deviates substantially from the negative pressure - treatment pressure - to be produced in the tank 30 the rotational speed of the centrifugal pump 3 is adjusted to account for the deviation. Here, substantially may refer to pressures deviating by more than 10%, such as more than 5%, such as more than 4%, preferably more than 3%, and even more than 2%. In a preferred embodiment this is implemented by use of a PI (proportional integral) controller which based on the measured pressure in the tank 30 adjust the rotational speed of the pump 3 to provide the required negative pressure.

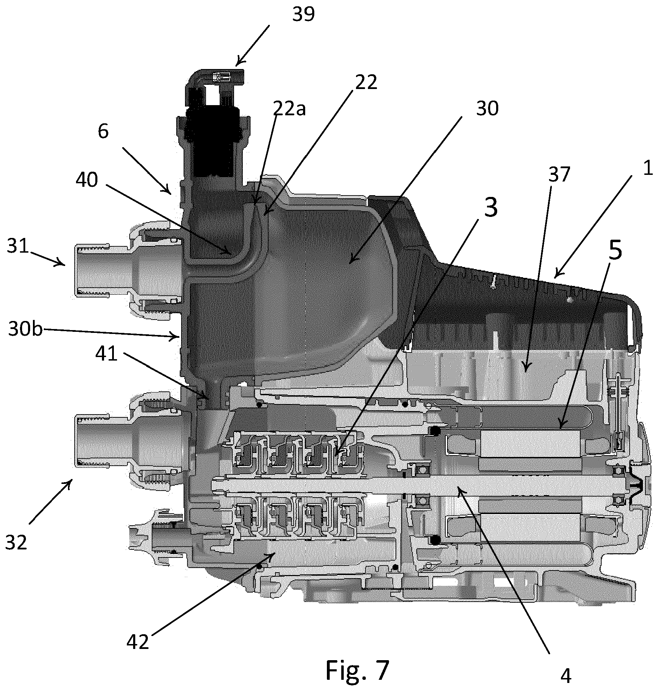

Reference is made to fig. 7 illustrating a longitudinal sectional representation through a liquid degassing system according to a preferred embodiment of the invention.

As will become apparent from the following disclosure, the embodiment shown in fig. 7 and other similar embodiments may be evaluated as forming a single unit adapted to perform a degassing method according to the invention when the unit is electrical connected to power the pump and other electronics comprised in the unit and when fluidicly connected with a system to be degassed. Preferred embodiments of a single unit comprises in the unit:
- a centrifugal pump 3 having a suction side and a discharge side, the pump 3 being a variable rotational speed pump;
- a tank 30, the tank 30 has vertical extension and has a liquid inlet connection 31 comprising a throttling device 43 arranged at an upper end of said tank 30 to receive liquid to be degassed through the throttling device 43 and an outlet arranged at a lower end of the tank 30 fluidicly connected to suction side of the centrifugal pump 3;
- a liquid outlet connection 32 fluidicly connected to the discharge side of the centrifugal pump to discharge liquid being at least partially degassed; and
- a gas outlet 39 fluidicly connected to the tank 30 to discharge gas accumulated in the tank 30 during degassing of liquid.

In embodiments comprising a pressure sensor, such sensor may also be comprised in the unit, preferably at a position upstream of the centrifugal pump, such as in the tank 30 or fluidicly inbetween the tank 30 and the centrifugal pump 3.

The illustrated liquid degassing system comprising a centrifugal pump 3 having a suction side and discharge side. The centrifugal pump 3 is typically a pump comprising a number of impeller stages arranged on a common shaft 4, a so-called multistage pump - and the pumping capacity may be selected according to a given demand for degassing.

The illustrated degassing system further comprising an electric motor 5 with an electrical/electronic control. The electrical/electronic control is used to set the rotational speed of electrical motor 5. The electrical motor is mechanical connected to the centrifugal pump 3 to drive the centrifugal pump 3 by connecting an output shaft of the electrical motor 5 with the common shaft of the centrifugal pump.

The electronics of the liquid degassing system are preferably accommodated in a separate electronics housing 37 which is arranged above the electric motor 5 and next to the tank 30 and forms part of the casing 1. The electronics are preferably adapted to carry out the control of the pump as otherwise disclosed herein.

A tank 30 is provided in the liquid degassing system and the tank 30 is arranged above the centrifugal pump 3. In the illustrated embodiment of fig. 7, the tank 30 is provided as a void inside liquid degassing system. The tank 30 and the centrifugal pump 3 are connected to one another via a construction unit 6 which comprises a liquid inlet connection 31 for supplying liquid to the liquid degassing system, a liquid outlet connection 32 to output liquid from the liquid degassing system. The construction unit 6 preferably provides fluid connections inter alia between the tank 30 and the exterior, between the tank 30 and the suction side of the centrifugal pump 3, and between the discharge side of the centrifugal pump 3 and the exterior of the liquid degassing system.

A gas outlet 39 is arranged in fluidic connection with an upper position of the tank 30. The gas outlet is configured to allow gas to flow out from the tank 30 while preventing gas from being sucked into the tank 30 through the gas outlet 39. In preferred embodiment, the gas outlet is embodied as a one way check-valve. A purpose of the gas outlet 39 is to allow for flushing out gas being collected in the tank 30 during a degassing. As described herein, degassing comprising producing by use of the centrifugal pump a vacuum in the tank 30 resulting in the generation of a gas above a surface of liquid in the tank 30 and this gas is flush out by introducing liquid into the tank while the centrifugal pump is either not running or running at reduced speed. The incoming liquid will displace the gas out through the gas outlet 39.

A first fluid conduit 40 is provided connecting the liquid inlet connection 31 with the tank 30 and a second fluid conduit 41 is provided connecting the tank 30 with the suction side of centrifugal pump 3. Further, a third fluid conduit 42 connecting the liquid outlet connection 32 and the discharge side of the centrifugal pump 3. As illustrated in fig. 7, these fluid conduits are provided in the construction unit 6.

The liquid inlet connection 31 defines an external liquid inlet connection of the liquid degassing system and the liquid outlet connection 32 defines an external liquid outlet connection of the liquid degassing system. In the illustrated embodiment of fig. 7, these openings are shown with protective caps blocking dirt or other substances from entering the openings during e.g. transportation, and these caps are to be removed when the degassing system is commissioned. As also illustrated, the centrifugal pump 3 is located downstream of the liquid inlet connection 31 and upstream of the liquid outlet connection 32 with respect to a flow of fluid inlet through the inlet connection and outlet through the outlet connection. The construction unit 6 can be configured as a single-piece or multi-piece plastic injection molded component - in the embodiment shown in fig. 7 it is made as a two-piece component.

As shown in fig. 7, a wall section 30b of the construction unit 6 defines a wall section of the tank 30. Thus, with one or more wall section of the tank defined within the liquid degassing system and a wall section defined by the construction unit 6, the void of the tank is defined when the construction unit is applied to the liquid degassing system.

Liquid to be degassed is preferably introduced into the tank 30 in the form of droplets or even a mist. To accomplish this, the first fluid conduit 40 has a nozzle 22 with a nozzle outlet 22a configured to provide droplets or mist and the outlet is arranged within the interior of the tank 30 an upper position of the tank 30. In the illustrated embodiment, the nozzle outlet 22a is arranged to spray liquid upwardly into the tank 30. However, other spray directions may be used such as inclined upwardly or downwardly or horizontal. It is generally preferred that the spray is forms a hollow cone, although the invention is not limited to such hollow cone. While the first fluid conduit 40 will provide throttling to some extent, it is generally preferred to use the nozzle 22 to provide most of the throttling needed to provide a decreased pressure in the tank 30. Accordingly, the combination of the first fluid conduit 40 and the nozzle preferably forms a throttling device 43.

In preferred embodiments, the nozzle 22 is arranged at an outlet position of the first fluid conduit 40 by being screwed, press-fitted or glued onto or into the fluid conduit 40 at the outlet of the first fluid conduit 40.

In alternative embodiments, the nozzle 22 is made integral with first fluid conduit 40. This is illustrated in fig. 7, where the channel of the first fluid conduit 40 is funnel shaped towards the outlet at the closing proceedings of the channel.

Although it may be advantageously to provide the first fluid conduit 40 as an integral part of the construction unit 6 (see fig. 7), it may also be advantageously to provide the first fluid conduit 40 as releasable arranged in the construction unit 6.

## Claims

1. A method of degassing water, of a heating, ventilation and/or air conditioning system the method utilizes liquid degassing system comprising a
• a centrifugal pump (3) having a suction side and a discharge side, said pump (3) being a variable rotational speed pump;
• an electrical motor (5) with an electrical/electronic control, said electrical motor (5) being connected to the centrifugal pump (3) to drive the centrifugal pump (3)
• a tank (30), said tank (30) has vertical extension and has a liquid inlet connection (31) comprising a throttling device (43) arranged at an upper end of said tank (30) to receive liquid to be degassed through said throttling device (43) and an outlet arranged at a lower end of said tank (30) fluidicly connected to suction side of the centrifugal pump (3);
• a liquid outlet connection (32) fluidicly connected to the discharge side of the centrifugal pump to discharge liquid being at least partially degassed; and
• a gas outlet (39) fluidicly connected to the tank (30) to discharge gas accumulated in the tank (30) during degassing of liquid, said gas outlet (39) comprises an air vent and a check valve (44),
wherein the method is carried out
• in one or more treatment steps each having a duration between begin and end of a treatment step effectuated by start and stop of the centrifugal pump, wherein a treatment step begins with liquid present in the tank (30), and
• in one or more flushing steps wherein gas accumulated in tank (30) during the treatment step is flushed out,
the liquid degassing system is configured to determine during a treatment step an actual value of a degassing parameter being either
• an electrical power consumed by the electric motor (5) during driving of the centrifugal pump (3),
• a rotational speed of the electrical motor, or
• an actual treatment pressure;
the method comprising
• arranging the liquid degassing system in fluidic connection with a heating, ventilation and/or air condition system being degassed and carrying water to be degassed so that said water flows into the tank (30);
• selecting a treatment pressure (Pt) to be obtained in the tank (30) upstream of the centrifugal pump (3);
• setting the rotational speed of the centrifugal pump (3) to provide said selected treatment pressure (Pt) to be obtained
• providing a dry-running threshold for one of the degassing parameters, which dry-running threshold represents a state in which the centrifugal pump is in an at least partly dry-running condition,
• determining an actual value of the degassing parameter,
• comparing the actual value of the degassing parameter and ending the treatment step if the actual value of the degassing parameter
∘ being said electrical power is smaller,
∘ being said rotational speed is larger, or
∘ being said actual treatment pressure determined by a pressure sensor (45) arranged to determine said actual treatment pressure is smaller than the dry-running threshold.

2. A method of degassing liquid according to claim 1, wherein the method further comprises
• determining a pressure (Ps) in the system being degassed;
• obtaining flow resistance characteristics of the throttling device (43);
• determining based on pump characteristics of the centrifugal pump (3) a rotational speed of the centrifugal pump (3), wherein said rotational speed provides a differential pressure across the centrifugal pump (3) matching
∘ the sum of said pressure (Ps) in the system being degassed and said treatment pressure (Pt) to be obtained with said
∘ one of said flow resistance characteristics.

3. A method of degassing liquid according to any one of the preceding claims, wherein said setting the rotational speed of the centrifugal pump (3) to provide said selected treatment pressure (Pt) to be obtained comprising
• determining an actual treatment pressure, said actual treatment pressure being the pressure in the tank (30) or the pressure upstream of the centrifugal pump, such as at the suction side of the pump (3) or in the tank (30);
• comparing said actual upstream pressure with said selected treatment pressure (Pt) to be obtained and if a difference is present, adjusting the rotational speed of the pump to set the actual upstream pressure substantially equal to the selected treatment pressure (Pt) to be obtained.

4. A method of degassing liquid according to claim 3, wherein the actual treatment pressure is determined in the tank (30) or at the suction side of the pump (3).

5. A method of degassing liquid according to any one of the preceding claims 3-4, wherein said adjusting comprising increasing the rotational speed of the pump (3) if the actual treatment pressure is smaller than said selected treatment pressure to be obtained and decreasing the rotational speed if the actual treatment pressure is larger than said selected treatment pressure to be obtained.

6. A method of degassing liquid according to any one of claims 3-5, wherein the adjustment of the rotational speed is carried out incrementally and where said actual treatment pressure is compared with said selected treatment pressure (Pt) to be obtained after each increment of the rotational speed, until said actual treatment pressure is substantial equal to said selected treatment pressure (Pt) to be obtained.

7. A method according to any one of the preceding claims, wherein one of said flushing steps is carried out subsequently to one of said treatment steps, the centrifugal pump (3) is stopped during the flushing step and the flushing step comprising inletting liquid into the tank to fill the tank (30) with liquid whereby the inlet liquid displaces gas out of the tank through the gas outlet (39).

8. A method according to any one of the preceding claims, wherein the duration of each said treatment steps is limited to a maximum treatment step time limit, and the method further comprising ending a treatment step if the maximum treatment step time limit has been reached.

9. A method according to any one of the preceding claims, wherein the treatment steps are carried out within a duration not exceeding a treatment time (T_{T}).

10. A method according to claim 8 or 9, wherein at least two treatment steps are carried out within said treatment time, and the method further comprising recording whether a number of said treatment steps within said treatment time have been ended by said maximum treatment step time has been reached, and in confirmative case decrease the treatment time.

11. A method according to claim 8, 9 or 10, wherein at least two treatment steps are carried out within said treatment time, and wherein the method further comprising recording whether a number of said treatment steps within said treatment time have been ended by said actual value of degassing parameter has been outside said dry-running threshold and in confirmative case increase the treatment time.

12. A method according to any one of the preceding claims, wherein prior to beginning a treatment step and with liquid present in the tank (30), the method further comprising
• providing a value of treatment pressure (Pt) to be obtained;
• determining to rotational speed for the centrifugal pump (3) required to produce said treatment pressure to be obtained, and
• beginning, and performing the treatment step by rotating the centrifugal pump (3) with the determined rotational speed, wherein the rotational speed of the centrifugal pump (3) preferably is reached by a ramp-up of the rotational speed.

13. A method according to claim 12, wherein the actual treatment pressure during a treatment step is determined and if the actual treatment pressure deviates substantially from the treatment pressure to be obtained, the rotational speed of the centrifugal pump (3) is adjusted to account for the deviation.

14. A system for degassing of liquid, preferably water, the system comprising
• a centrifugal pump (3) having a suction side and a discharge side, said pump (3) being a variable rotational speed pump, driven by an electrical motor with an electrical/electronic control to control the rotational speed of the centrifugal pump;
• a tank (30), said tank (30) has a vertical extension and has a liquid inlet connection (31) comprising a throttling device (43) arranged at an upper end of said tank (30) to receive liquid to be degassed through said throttling device (43) and an outlet arranged at a lower end of said tank (30) fluidicly connected to suction side of the centrifugal pump (3);
• a liquid outlet connection (32) fluidicly connected to the discharge side of the centrifugal pump (3) to discharge liquid being at least partially degassed; and
• and a gas outlet (39) fluidicly connected to the tank (30) to discharge gas accumulated in the tank (30) during degassing of liquid, said gas outlet (39) comprises an air vent and a check valve (44), and
• a controller configured to carry out the method according to any one of the preceding claims whereby the system comprises a pressure sensor (45) for measuring the pressure.

15. A system according to claim 14, wherein the system is comprised in a single unit.

## Patentansprüche

1. Verfahren zur Entgasung von Wasser eines Heizungs-, Lüftungs- und/oder Klimatisierungssystems, wobei das Verfahren ein Flüssigkeitsentgasungssystem nutzt, umfassend
• eine Zentrifugalpumpe (3) mit einer Saugseite und einer Druckseite, wobei die Pumpe (3) eine Pumpe mit variabler Drehgeschwindigkeit ist;
• einen Elektromotor (5) mit einer elektrischen/elektronischen Steuerung, wobei der Elektromotor (5) mit der Zentrifugalpumpe (3) verbunden ist, um die Zentrifugalpumpe (3) anzutreiben;
• einen Tank (30), wobei der Tank (30) eine vertikale Erstreckung aufweist und einen Flüssigkeitseinlassanschluss (31) aufweist, der eine an einem oberen Ende des Tanks (30) angeordnete Drosselvorrichtung (43) zum Aufnehmen von zu entgasender Flüssigkeit durch die Drosselvorrichtung (43) sowie einen an einem unteren Ende des Tanks (30) angeordneten Auslass umfasst, der strömungstechnisch mit der Saugseite der Zentrifugalpumpe (3) verbunden ist;
• einen Flüssigkeitsauslassanschluss (32), der strömungstechnisch mit der Druckseite der Zentrifugalpumpe verbunden ist, um zumindest teilweise entgaste Flüssigkeit abzugeben; und
• einen Gasauslass (39), der strömungstechnisch mit dem Tank (30) verbunden ist, um Gas abzugeben, das sich während der Entgasung der Flüssigkeit in dem Tank (30) angesammelt hat, wobei der Gasauslass (39) eine Entlüftungsöffnung und ein Rückschlagventil (44) umfasst,
wobei das Verfahren durchgeführt wird
• in einem oder mehreren Behandlungsschritten, die jeweils eine Dauer zwischen Beginn und Ende eines Behandlungsschritts aufweisen, die durch das Starten und Stoppen der Zentrifugalpumpe bewirkt wird, wobei ein Behandlungsschritt mit in dem Tank (30) vorhandener Flüssigkeit beginnt, und
• in einem oder mehreren Spülschritten, wobei das während des Behandlungsschritts im Tank (30) angesammelte Gas ausgespült wird,
wobei das Flüssigkeitsentgasungssystem so ausgebildet ist, dass es während eines Behandlungsschritts einen Istwert eines Entgasungsparameters bestimmt, der entweder
• eine von dem Elektromotor (5) während des Antriebs der Zentrifugalpumpe (3) aufgenommene elektrische Leistung ist,
• eine Drehgeschwindigkeit des Elektromotors ist, oder
• ein tatsächlicher Behandlungsdruck ist;
wobei das Verfahren umfasst
• Anordnen des Flüssigkeitsentgasungssystems in strömungstechnischer Verbindung mit einem Heizungs-, Lüftungs- und/oder Klimatisierungssystem, das entgast wird und zu entgasendes Wasser führt, damit das Wasser in den Tank (30) fließt;
• Auswählen eines in dem Tank (30) stromaufwärts der Zentrifugalpumpe (3) zu erhaltenen Behandlungsdrucks (Pt);
• Einstellen der Drehgeschwindigkeit der Zentrifugalpumpe (3), um den ausgewählten, zu erhaltenen Behandlungsdruck (Pt) bereitzustellen
• Bereitstellen eines Trockenlaufschwellenwerts für einen der Entgasungsparameter, wobei dieser Trockenlaufschwellenwert einen Zustand darstellt, in dem sich die Zentrifugalpumpe in einem zumindest teilweise Trockenlaufzustand befindet,
• Bestimmen eines Istwerts des Entgasungsparameters,
• Vergleichen des Istwerts des Entgasungsparameters und Beenden des Behandlungsschritts, wenn der Istwert des Entgasungsparameters
∘ der die elektrische Leistung ist, kleiner ist,
∘ der die Drehgeschwindigkeit ist, größer ist, oder
∘ der der von einem Drucksensor (45) bestimmte tatsächliche Behandlungsdruck ist, der zur Bestimmung des tatsächlichen Behandlungsdrucks angeordnet ist, kleiner ist als der Trockenlaufschwellenwert.

2. Verfahren zur Entgasung von Flüssigkeit nach Anspruch 1, wobei das Verfahren weiter umfasst
• Bestimmen eines Drucks (Ps) in dem zu entgasenden System;
• Erhalten von Durchflusswiderstandseigenschaften der Drosselvorrichtung (43);
• Bestimmen einer Drehgeschwindigkeit der Zentrifugalpumpe (3) auf der Grundlage von Pumpeneigenschaften der Zentrifugalpumpe (3), wobei die Drehgeschwindigkeit einen Differenzdruck über der Zentrifugalpumpe (3) bereitstellt, der
∘ der Summe aus dem Druck (Ps) in dem zu entgasenden System und dem zu erhaltenden Behandlungsdruck (Pt) mit der einen von den Durchflusswiderstandseigenschaften entspricht.

3. Verfahren zur Entgasung von Flüssigkeit nach einem der vorstehenden Ansprüche, wobei das Einstellen der Drehgeschwindigkeit der Zentrifugalpumpe (3) zur Bereitstellung des ausgewählten, zu erhaltenen Behandlungsdrucks (Pt) umfasst
• Bestimmen eines tatsächlichen Behandlungsdrucks, wobei der tatsächliche Behandlungsdruck der Druck in dem Tank (30) oder der Druck stromaufwärts der Zentrifugalpumpe ist, wie zum Beispiel an der Saugseite der Pumpe (3) oder in dem Tank (30);
• Vergleichen des tatsächlichen Drucks stromaufwärts mit dem ausgewählten, zu erhaltenen Behandlungsdruck (Pt) und, falls eine Differenz vorliegt, Anpassen der Drehgeschwindigkeit der Pumpe, um den tatsächlichen Druck stromaufwärts im Wesentlichen gleich dem ausgewählten, zu erhaltenen Behandlungsdruck (Pt) einzustellen.

4. Verfahren zur Entgasung von Flüssigkeit nach Anspruch 3, wobei der tatsächliche Behandlungsdruck in dem Tank (30) oder an der Saugseite der Pumpe (3) bestimmt wird.

5. Verfahren zur Entgasung von Flüssigkeit nach einem der vorstehenden Ansprüche 3 - 4, wobei das Anpassen das Erhöhen der Drehgeschwindigkeit der Pumpe (3) umfasst, wenn der tatsächliche Behandlungsdruck kleiner ist als der ausgewählte, zu erhaltene Behandlungsdruck, und das Verringern der Drehgeschwindigkeit, wenn der tatsächliche Behandlungsdruck größer ist als der ausgewählte, zu erhaltene Behandlungsdruck.

6. Verfahren zur Entgasung von Flüssigkeit nach einem der Ansprüche 3 - 5, wobei die Anpassung der Drehgeschwindigkeit schrittweise durchgeführt wird und wobei der tatsächliche Behandlungsdruck nach jeder Erhöhung der Drehgeschwindigkeit mit dem ausgewählten, zu erhaltenen Behandlungsdruck (Pt) verglichen wird, bis der tatsächliche Behandlungsdruck im Wesentlichen gleich dem ausgewählten, zu erhaltenen Behandlungsdruck (Pt) ist.

7. Verfahren nach einem der vorstehenden Ansprüche, wobei einer der Spülschritte im Anschluss an einen der Behandlungsschritte durchgeführt wird, die Zentrifugalpumpe (3) während des Spülschritts gestoppt wird und der Spülschritt das Einleiten von Flüssigkeit in den Tank umfasst, um den Tank (30) mit Flüssigkeit zu füllen, wodurch die eingeleitete Flüssigkeit Gas aus dem Tank durch den Gasauslass (39) verdrängt.

8. Verfahren nach einem der vorstehenden Ansprüche, wobei die Dauer jedes der Behandlungsschritte auf eine maximale Behandlungsschritt-Zeitgrenze begrenzt ist und das Verfahren weiter das Beenden eines Behandlungsschritts umfasst, wenn die maximale Behandlungsschritt-Zeitgrenze erreicht wurde.

9. Verfahren nach einem der vorstehenden Ansprüche, wobei die Behandlungsschritte innerhalb einer Dauer durchgeführt werden, die eine Behandlungszeit (T_{T}) nicht überschreitet.

10. Verfahren nach Anspruch 8 oder 9, wobei zumindest zwei Behandlungsschritte innerhalb der Behandlungszeit durchgeführt werden und das Verfahren weiter das Erfassen, ob eine Anzahl der Behandlungsschritte innerhalb der Behandlungszeit beendet wurde, bevor die maximale Behandlungsschrittzeit erreicht wurde, umfasst, und wobei im bestätigenden Fall die Behandlungszeit verringert wird.

11. Verfahren nach Anspruch 8, 9 oder 10, wobei zumindest zwei Behandlungsschritte innerhalb der Behandlungszeit durchgeführt werden und wobei das Verfahren weiter das Erfassen, ob eine Anzahl der Behandlungsschritte innerhalb der Behandlungszeit beendet wurde, weil der tatsächliche Wert des Entgasungsparameters außerhalb des Trockenlaufschwellenwerts lag, umfasst und wobei im bestätigenden Fall die Behandlungszeit erhöht wird.

12. Verfahren nach einem der vorstehenden Ansprüche, wobei vor Beginn eines Behandlungsschritts und bei Vorhandensein von Flüssigkeit in dem Tank (30) das Verfahren weiter umfasst
• Bereitstellen eines Wertes für den zu erhaltenen Behandlungsdruck (Pt);
• Bestimmen der Drehgeschwindigkeit für die Zentrifugalpumpe (3), die zur Erzeugung des zu erhaltenen Behandlungsdrucks erforderlich ist, und
• Beginnen und Durchführen des Behandlungsschritts durch Drehen der Zentrifugalpumpe (3) mit der bestimmten Drehgeschwindigkeit, wobei die Drehgeschwindigkeit der Zentrifugalpumpe (3) vorzugsweise durch einen Drehgeschwindigkeitsanstieg erreicht wird.

13. Verfahren nach Anspruch 12, wobei der tatsächliche Behandlungsdruck während eines Behandlungsschritts bestimmt wird und, falls der tatsächliche Behandlungsdruck im Wesentlichen von dem zu erhaltenen Behandlungsdruck abweicht, die Drehgeschwindigkeit der Zentrifugalpumpe (3) angepasst wird, um die Abweichung auszugleichen.

14. System zur Entgasung von Flüssigkeit, vorzugsweise Wasser, wobei das System umfasst
• eine Zentrifugalpumpe (3) mit einer Saugseite und einer Druckseite, wobei die Pumpe (3) eine Pumpe mit variabler Drehgeschwindigkeit ist, die von einem Elektromotor mit einer elektrischen/elektronischen Steuerung angetrieben wird, um die Drehgeschwindigkeit der Zentrifugalpumpe zu steuern;
• einen Tank (30), wobei der Tank (30) eine vertikale Erstreckung aufweist und einen Flüssigkeitseinlassanschluss (31) aufweist, der eine an einem oberen Ende des Tanks (30) angeordnete Drosselvorrichtung (43) zum Aufnehmen von zu entgasender Flüssigkeit durch die Drosselvorrichtung (43) sowie einen an einem unteren Ende des Tanks (30) angeordneten Auslass umfasst, der strömungstechnisch mit der Saugseite der Zentrifugalpumpe (3) verbunden ist;
• einen Flüssigkeitsauslassanschluss (32), der strömungstechnisch mit der Druckseite der Zentrifugalpumpe (3) verbunden ist, um zumindest teilweise entgaste Flüssigkeit abzugeben; und
• und einen Gasauslass (39), der strömungstechnisch mit dem Tank (30) verbunden ist, um das während der Entgasung der Flüssigkeit in dem Tank (30) angesammelte Gas abzugeben, wobei der Gasauslass (39) eine Entlüftungsöffnung und ein Rückschlagventil (44) umfasst, und
• eine Steuereinheit, die so ausgebildet ist, dass sie das Verfahren nach einem der vorstehenden Ansprüche durchführt, wobei das System einen Drucksensor (45) zur Messung des Drucks umfasst.

15. System nach Anspruch 14, wobei das System in einer einzigen Einheit umfasst ist.

## Revendications

1. Procédé de dégazage d'eau d'un système de chauffage, de ventilation et/ou de climatisation, le procédé utilisant un système de dégazage de liquide comprenant
• une pompe centrifuge (3) présentant un côté aspiration et un côté refoulement, ladite pompe (3) étant une pompe à vitesse de rotation variable ;
• un moteur électrique (5) doté d'une commande électrique/électronique, ledit moteur électrique (5) étant relié à la pompe centrifuge (3) pour entraîner la pompe centrifuge (3) ;
• un réservoir (30), ledit réservoir (30) ayant une extension verticale et comportant un raccord d'entrée de liquide (31) comprenant un dispositif d'étranglement (43) disposé à une extrémité supérieure dudit réservoir (30) pour recevoir du liquide à dégazer à travers ledit dispositif d'étranglement (43) et une sortie disposée à une extrémité inférieure dudit réservoir (30), en communication fluidique avec le côté aspiration de la pompe centrifuge (3) ;
• un raccord de sortie de liquide (32) en communication fluidique avec le côté refoulement de la pompe centrifuge pour refouler du liquide qui est au moins partiellement dégazé ; et
• une sortie de gaz (39) en communication fluidique avec le réservoir (30) pour rejeter du gaz accumulé dans le réservoir (30) pendant le dégazage de liquide, ladite sortie de gaz (39) comprenant un orifice d'évacuation d'air et un clapet anti-retour (44),
dans lequel le procédé est effectué
• en une ou plusieurs étapes de traitement, chacune ayant une durée comprise entre le début et la fin d'une étape de traitement, réalisée par démarrage et arrêt de la pompe centrifuge, une étape de traitement commençant alors que du liquide est présent dans le réservoir (30), et
• en une ou plusieurs étapes d'évacuation au cours desquelles du gaz accumulé dans le réservoir (30) pendant l'étape de traitement est évacué,
le système de dégazage de liquide est configuré pour déterminer pendant une étape de traitement une valeur réelle d'un paramètre de dégazage qui est soit
• une puissance électrique consommée par le moteur électrique (5) pendant l'entraînement de la pompe centrifuge (3), soit
• une vitesse de rotation du moteur électrique, ou
• une pression de traitement réelle ;
le procédé comprenant les étapes consistant à
• mettre le système de dégazage de liquide en communication fluidique avec un système de chauffage, de ventilation et/ou de climatisation en cours de dégazage et acheminer l'eau à dégazer de manière que ladite eau s'écoule dans le réservoir (30) ;
• sélectionner une pression de traitement (Pt) à obtenir dans le réservoir (30) en amont de la pompe centrifuge (3) ;
• régler la vitesse de rotation de la pompe centrifuge (3) de manière à fournir ladite pression de traitement sélectionnée (Pt) à obtenir
• établir un seuil de fonctionnement à sec pour l'un des paramètres de dégazage, lequel seuil de fonctionnement à sec représente un état dans lequel la pompe centrifuge est en un état de fonctionnement au moins partiellement à sec,
• déterminer une valeur réelle du paramètre de dégazage,
• comparer la valeur réelle du paramètre de dégazage et mettre fin à l'étape de traitement si la valeur réelle du paramètre de dégazage
∘ s'agissant de ladite puissance électrique, est inférieure,
∘ s'agissant de ladite vitesse de rotation, est supérieure, ou
∘ s'agissant de ladite pression de traitement réelle déterminée par un capteur de pression (45) disposé pour déterminer ladite pression de traitement réelle, est inférieure au seuil de fonctionnement à sec.

2. Procédé de dégazage de liquide selon la revendication 1, dans lequel le procédé comprend en outre les étapes consistant à
• déterminer une pression (Ps) dans le système en cours de dégazage ;
• obtenir des caractéristiques de résistance à l'écoulement du dispositif d'étranglement (43) ;
• déterminer, sur la base de caractéristiques de pompe de la pompe centrifuge (3), une vitesse de rotation de la pompe centrifuge (3), ladite vitesse de rotation fournissant une pression différentielle entre l'entrée et la sortie de la pompe centrifuge (3) faisant correspondre
∘ la somme de ladite pression (Ps) dans le système en cours de dégazage et de ladite pression de traitement (Pt) à obtenir, avec ladite
∘ une desdites caractéristiques de résistance à l'écoulement.

3. Procédé de dégazage de liquide selon l'une quelconque des revendications précédentes, dans lequel ledit réglage de la vitesse de rotation de la pompe centrifuge (3) pour fournir ladite pression de traitement sélectionnée (Pt) à obtenir comprend :
• déterminer une pression de traitement réelle, ladite pression de traitement réelle étant la pression dans le réservoir (30) ou la pression en amont de la pompe centrifuge, telle qu'au niveau du côté aspiration de la pompe (3) ou dans le réservoir (30) ;
• comparer ladite pression réelle en amont à ladite pression de traitement sélectionnée (Pt) à obtenir et, si une différence est présente, ajuster la vitesse de rotation de la pompe pour rendre la pression réelle en amont sensiblement égale à la pression de traitement sélectionnée (Pt) à obtenir.

4. Procédé de dégazage de liquide selon la revendication 3, dans lequel la pression réelle de traitement est déterminée dans le réservoir (30) ou au niveau du côté aspiration de la pompe (3).

5. Procédé de dégazage de liquide selon l'une quelconque des revendications 3-4 précédentes, dans lequel ledit ajustement comprend augmenter la vitesse de rotation de la pompe (3) si la pression de traitement réelle est inférieure à ladite pression de traitement sélectionnée à obtenir, et réduire la vitesse de rotation si la pression de traitement réelle est supérieure à ladite pression de traitement sélectionnée à obtenir.

6. Procédé de dégazage de liquide selon l'une quelconque des revendications 3-5, dans lequel l'ajustement de la vitesse de rotation est effectué de manière incré-mentielle et où ladite pression de traitement réelle est comparée à ladite pression de traitement sélectionnée (Pt) à obtenir après chaque incrément de la vitesse de rotation, jusqu'à ce que ladite pression de traitement réelle soit sensiblement égale à ladite pression de traitement sélectionnée (Pt) à obtenir.

7. Procédé selon l'une quelconque des revendications précédentes, dans lequel l'une desdites étapes d'évacuation est effectuée à la suite de l'une desdites étapes de traitement, la pompe centrifuge (3) est arrêtée pendant l'étape d'évacuation et l'étape d'évacuation comprend l'introduction de liquide dans le réservoir pour remplir le réservoir (30) avec du liquide, de sorte que le liquide introduit chasse le gaz hors du réservoir via la sortie de gaz (39).

8. Procédé selon l'une quelconque des revendications précédentes, dans lequel la durée de chacune desdites étapes de traitement est limitée à une limite de durée maximale d'étape de traitement, et le procédé comprend en outre mettre fin à une étape de traitement si la limite de durée maximale d'étape de traitement a été atteinte.

9. Procédé selon l'une quelconque des revendications précédentes, dans lequel les étapes de traitement sont effectuées en un espace de temps n'excédant pas une durée de traitement (T_{T}).

10. Procédé selon la revendication 8 ou 9, dans lequel au moins deux étapes de traitement sont effectuées en l'espace de ladite durée de traitement, et le procédé comprend en outre le fait d'enregistrer si un nombre desdites étapes de traitement en l'espace de ladite durée de traitement ont été terminées du fait que ladite durée maximale d'étape de traitement a été atteinte, et si c'est le cas, de réduire la durée de traitement.

11. Procédé selon la revendication 8, 9 ou 10, dans lequel au moins deux étapes de traitement sont effectuées en l'espace de ladite durée de traitement, et dans lequel le procédé comprend en outre le fait d'enregistrer si un nombre desdites étapes de traitement en l'espace de ladite durée de traitement ont été terminées du fait que ladite valeur réelle de paramètre de dégazage s'est située en dehors dudit seuil de fonctionnement à sec et, si c'est le cas, d'augmenter la durée de traitement.

12. Procédé selon l'une quelconque des revendications précédentes, dans lequel, avant de commencer une étape de traitement et alors que du liquide est présent dans le réservoir (30), le procédé comprend en outre les étapes consistant à
• fournir une valeur de pression de traitement (Pt) à obtenir ;
• déterminer la vitesse de rotation de la pompe centrifuge (3) requise pour produire ladite pression de traitement à obtenir, et
• commencer et effectuer l'étape de traitement en mettant en rotation la pompe centrifuge (3) à la vitesse de rotation déterminée, la vitesse de rotation de la pompe centrifuge (3) étant de préférence atteinte par une augmentation de la vitesse de rotation.

13. Procédé selon la revendication 12, dans lequel la pression de traitement réelle pendant une étape de traitement est déterminée et si la pression de traitement réelle s'écarte sensiblement de la pression de traitement à obtenir, la vitesse de rotation de la pompe centrifuge (3) est ajustée pour tenir compte de l'écart.

14. Système de dégazage de liquide, de préférence d'eau, ledit système comprenant
• une pompe centrifuge (3) présentant un côté aspiration et un côté refoulement, ladite pompe (3) étant une pompe à vitesse de rotation variable, entraînée par un moteur électrique doté d'une commande électrique/électronique pour commander la vitesse de rotation de la pompe centrifuge ;
• un réservoir (30), ledit réservoir (30) ayant une extension verticale et comportant un raccord d'entrée de liquide (31) comprenant un dispositif d'étranglement (43) disposé à une extrémité supérieure dudit réservoir (30) pour recevoir du liquide à dégazer à travers ledit dispositif d'étranglement (43) et une sortie disposée à une extrémité inférieure dudit réservoir (30), en communication fluidique avec le côté aspiration de la pompe centrifuge (3) ;
• un raccord de sortie de liquide (32) en communication fluidique avec le côté refoulement de la pompe centrifuge (3) pour refouler le liquide qui est au moins partiellement dégazé ; et
• une sortie de gaz (39) en communication fluidique avec le réservoir (30) pour rejeter du gaz accumulé dans le réservoir (30) pendant le dégazage de liquide, ladite sortie de gaz (39) comprenant un orifice d'évacuation d'air et un clapet anti-retour (44), et
• une unité de commande configurée pour mettre en œuvre le procédé selon l'une quelconque des revendications précédentes, le système comprenant un capteur de pression (45) destiné à mesurer la pression.

15. Système selon la revendication 14, dans lequel le système est compris dans une unité unique.
